# EUROPÄISCHE PATENTANMELDUNG

(11) **EP 0 790 105 A2**
(43) Veröffentlichungstag der Anmeldung: **20.08.1997**
(21) Anmeldenummer: 97102355.1
(22) Anmeldetag: 13.02.1997
(51) Int. Cl.: B25H 1/00

(54) **Vorrichtung zum Führen von Handbearbeitungsgeräten**

(30) Priorität: 15.02.1996 DE 19605445
(71) Anmelder: Mai, Roland, 97896 Freudenberg (DE)
(72) Erfinder: Mai, Roland, 97896 Freudenberg (DE)
(74) Vertreter: Petra, Elke, Dipl.-Ing.

(57) **Zusammenfassung**

Es wird eine Vorrichtung beschrieben, die eine exakte Führung von Handbearbeitungsgeräten erlaubt und damit die mit diesen Geräten erreichbare Bearbeitungsgenauigkeit steigert, ohne daß der besondere Vorteil dieser Geräte, die Mobilität, eingeschränkt wird. Ein Geräte (1) wird mittels einer austauschbaren, handelsüblichen Geräten angepaßten Halterung (2) in einem Gestell (8) angebracht, das sich über in ihrer Höhe verstellbare Abstützungen (6) auf der Auflagefläche (5) des Werkstückes (4) direkt abstützt. Durch die Höhenverstellung der Abstützungen (6) , z.B. mittels Gewindespindeln, kann der Abstand und die Neigung zwischen der Auflagefläche (5) und dem Werkzeug (3) variiert werden. Ebenso ist es möglich, die Halterung (2) und damit das Gerät (1), z.B. zum Anfasen, im Gestell um eine Schwenkachse (29) schnellzuverschwenken. An Markierungen (10, 11) sind Neigung und Höhe des Werkzeuge (3) feststellbar. Zur Bearbeitung von z.B. bereits eingepaßten Fensterrahmen ist die Halterung (2) und damit das Gerät (1) seitlich aus der Vorrichtung herausragend anbringbar.

## Beschreibung

Die Erfindung betrifft eine Vorrichtung zum Führen von Handbearbeitungsgeräten mit motorisch betriebenen Werkzeugen, wie Handhobel, zur Bearbeitung von langen Werkstücken wie Balken, Bretter oder Leisten entsprechend dem Oberbegriff des Patentanspruchs 1.

Um die Bearbeitungsgenauigkeit und den Einsatzbereich von Handbearbeitungsgeräten zu steigern und zu erweitern, werden bislang diese mobilen Geräte in Vorrichtungen bzw. Gestellen befestigt, so daß ihre Funktionalität der von stationären Maschinen, wie z.B. stationären Hobel, Fräsmaschinen oder Kreissägen näher kommt. Derart befestigte Handbearbeitungsgeräte werden oft am Werkort eingesetzt z.B. auf Baustellen oder in Hobbywerkstätten. In Gestellen bzw - Vorrichtungen aufgenommene Handbearbeitungsgeräte stellen dabei einen zufriedenstellenden Kompromiß zwischen Mobilität und Bearbeitungsgenauigkeit dar.

So ist aus der DE 39 03 215 A1 eine an einer elektrischen Handhobelmaschine oder Handschleifmaschine zu montierende Führungsvorrichtung bekannt, die im wesentlichen beidseitig in Längsrichtung aufeinanderfolgend am Maschinengehäuse zu befestigende Tragstücke und auf jeder Längsseite je einen an den Tragstücken vertikal über Schrauben verstellbar anzubringende plattenförmige oder leistenförmige Führungsteile aufweist. Die Führungsteile werden per Schrauben und innen vorgesehenen Langlöchern auf ein bestimmtes Endmaß höheneingestellt und beenden den Materialabtrag, sobald sie auf der Arbeitsfläche zur Anlage kommen und sorgen dafür, daß die erzeugten Flächen planparallel zur Arbeitsfläche sind. Eine winkelige bzw. schräge Bearbeitung oder Anfasung ist nicht möglich. Zur Befestigung des Bearbeitungsgeräts werden quer durch dieses hindurchgeführte Gewindebolzen verwendet, so daß handelsübliche Geräte, die solche Querbohrungen nicht besitzen, hier nicht einsetzbar sind. Zudem muß für den Einsatz der Vorrichtung diese erst aus lauter vielen Einzelteilen rund um das Gerät aufgebaut werden, wobei eine genaue Einzel-Höheneinstellung durch eine jede der vier Schraubverbindungen vorgenommen werden muß. Ein schneller Werkzeug- bzw. Gerätewechsel ist somit auch nicht möglich.

Der Erfindung liegt somit die Aufgabe zugrunde, eine handliche, konstruktiv und in der Anwendung einfache Vorrichtung zum Führen von Handbearbeitungsgeräten anzugeben, die eine präzise Bearbeitung auch von sehr langen Werkstücken vorzugsweise vor Ort erlaubt.

Diese Aufgabe wird durch eine Vorrichtung mit den Merkmalen des Anspruchs 1 gelöst. Vorteilhafte Weiterbildungen des Erfindungsgedankens sind in den Unteransprüchen angegeben.

Demgemäß wird das verwendete Handbearbeitungsgerät mit motorgetriebenen Werkzeugen, z.B. ein Handhobel, in einer Vorrichtung aufgenommen und befestigt. Die Vorrichtung wird dabei zur Bearbeitung über das Werkstück geführt, wobei das Werkzeug mit dem Werkstück in Eingriff gebracht ist. Während der Führung der Vorrichtung über das Werkstück stützt sich diese auf der Auflagefläche des Werkstücks ab, ohne mit dieser in irgendeiner Weise formschlüssig verbunden zu sein.

Die bearbeitete Werkstückoberfläche entspricht folglich dem Profil der Auflagefläche des Werkstücks. Je nach gewünschter Oberfläche des Werkstückes nach der Bearbeitung kann die geeignete Auflagefläche ausgesucht werden. So kann z.B. ein langer geschwungener bzw. gebogener Balken mittels einer geraden, ebenen Auflagefläche zu einem absolut geraden Balken zugeschnitten bzw. gehobelt werden. Eine Welle oder ähnliche Ausnehmungen können bei entsprechend geformter Auflage ebenfalls eingearbeitet werden. Ein großer Vorteil liegt somit darin, daß selbst bei sehr langen Werkstücken, wie Balken oder Bretter, eine präzise Bearbeitung möglich ist, da der Arbeitsbereich der Vorrichtung nicht beschränkt ist. Zudem ist die gesamte Vorrichtung sehr handlich, muß nicht auf eine feste Unterlage, z.B. auf einen Arbeitstisch, gespannt oder in einer Führung eingespannt werden. Ebenso ist eine eigens auf die Vorrichtung abgestimmte Auflagefläche oder Führungseinrichtung nicht notwendig.

Wenn sich die Abstützungen in ihrer Länge gemeinsam, also zugleich, verstellen lassen, so ist es für ein gleichmäßiges Absenken des Handbearbeitungsgerätes, parallel zur Auflagefläche, von Vorteil, wenn sich alle Abstützungen gleichzeitig verstellen lassen und zwar mit gleicher Verstellgeschwindigkeit. Für eine Schrägstellung des Handbearbeitungsgerätes ist es von Vorteil, wenn sich die auf einer Seite des Werkstückes liegenden Abstützungen gleichzeitig verkürzen bzw. erhöhen lassen und zwar ebenfalls mit gleicher Verstellgeschwindigkeit.

Von besonderem Vorteil ist, wenn die Abstützungen der Vorrichtung in ihrer Höhe veränderbar sind, so daß der Abstand und die Neigung des Werkzeugs zur Auflagefläche einstellbar ist. Indem eine abgestimmte Verkürzung oder Verlängerung der Abstützungen in der Weise erfolgt, daß infolge unterschiedlicher Längen bzw. Höhen der Abstützungen eine Schrägstellung der Vorrichtung erfolgt, können Schrägen in das Werkstück, z.B. einen Balken, eingearbeitet werden. Durch eine Schrägstellung der Vorrichtung wird nämlich auch das darin befestigte Handbearbeitungsgerät schräg gestellt. Dabei ist es für eine gleichmäßige Abschrägung des Werkstücks nicht unbedingt notwendig, daß parallel zur Arbeitsrichtung ein Anschlag für die Vorrichtung angebracht wird. Die Führung der Vorrichtung kann in diesem Fall auch von einer Kante des Werkstückes übernommen werden. Ein Anschlag zur Führung der Vorrichtung ist dann angebracht, wenn eine sich verjüngende Schräge eingearbeitet werden soll. Dann sollte ein dieser Verjüngung entsprechender Anschlag längs der Arbeitsrichtung angebracht werden. Wenn ein gleichmäßiges Dicken des Werkstückes gewünscht wird, werden die Abstützungen auf gleiche Länge bzw. Höhe eingestellt, so daß das Handbearbeitungsgerät parallel zur Auflagefläche des Werkstückes liegt und der Abstand zwischen Werkzeug und Auflagefläche im Falle eines Hobels der Dicke der Werkstückes nach der Bearbeitung entspricht. Abhängig davon, wie tief im Falle eines Hobels das Hobelmesser durch die Verkürzung der Abstützung im Vergleich zu der Dicke/Höhe des Werkstückes gesetzt wird, kann geschlichtet oder gedickt werden.

Von Vorteil ist, wenn die Verstellung der Länge der Abstützungen in Stufen oder stufenlos möglich ist. Dafür ist eine in ihrer Höhe verstellbare Abstützung zumindest zweiteilig ausgeführt, bestehend aus einem starren Teil und einem relativ zu diesem höhenbeweglichen Teil. So ist es möglich, den beweglichen Teil in dem starren Teil verschieblich anzuordnen, z.B. nach Art einer Teleskopeinrichtung. Eine Verschiebung kann dabei direkt durch Herausziehen bzw. Hineinschieben vorgenommen werden, wobei die Positionen des verschieblichen Teils z.B. mittels Splinte stufenweise blockiert wird. Eine stufenlose Arretierung bzw. Feststellung des verschieblichen Teils kann über Spannvorrichtungen oder aufgrund von Selbsthemmung herbeigeführt werden.

Die Blockierung der Verstelleinrichtungen bringt den Vorteil, daß sich die Position des Handbearbeitungsgerätes während der Bearbeitung durch eine selbständige Höhenänderung der Abstützungen nicht verändert.

Für diese gleichmäßige und im wesentlichen zeitgleiche Verstellung mehrerer Abstützungen ist es von Vorteil, wenn die Höhenverstellung über Gewindespindeln erfolgt, die in jeder Abstützung angebracht sind. In dem starren Teil der Abstützung ist dann z.B. eine Gewindehülse angeordnet, in der eine Gewindestange vorgesehen ist. Je nach Drehrichtung der Gewindestange wird die Abstützung verlängert oder verkürzt. Dabei stellt die Gewindestange den beweglichen Teil der Abstützung dar oder ist mit diesem fest verbunden. Bei geeigneter Auswahl der Gewindesteigung, z.B. bei entsprechend flacher Steigung, ist diese Verstellung zugleich selbsthemmend. Die Gewindespindeln können gleichzeitig angetrieben werden. Dazu sind sie über Übertragungselemente, wie Wellen, Getriebe und/oder Zahnriemen miteinander verbunden, so daß eine Drehung der Gewindestangen zugleich, zentral eingeleitet werden kann. Um ausgewählte Abstützungen zu verlängern oder zu verkürzen, sind die Gewindestangen der nicht zu verstellenden Abstützungen vom zentralen Antrieb z.B. über Schiebekupplungen zu entkoppeln.

Vorteilhaft ist, wenn die Gewindespindeln über an den Abstützungen in Getriebegehäusen angeordnete Getriebe angelenkt werden, so daß die Gewindespindeln über diese Getriebe angetrieben werden können. Die im oberen Bereich der Abstützungen angebrachten Getriebe werden, wie bereits erwähnt, mit Übertragungselementen verbunden. Da die auf einer Seite liegenden, längsseitig angeordneten Abstützungen nicht einzeln verstellt werden müssen, werden deren Gewindespindeln über einen nicht entkoppelbaren Antrieb verbunden, z. B. über eine Antriebswelle zwischen den jeweiligen Winkelgetrieben. Die schmalseitige, die beiden Seiten übernehmende Verbindung ist vorteilhafter Weise entkoppelbar, so daß die Vorrichtung durch einseitige Höhenverstellung der Abstützungen in Schrägstellung gebracht werden kann. Eine solche entkoppelbare Verbindung stellt eine Verbindung der beiden längsseitigen Antriebnswellen mittels eines über Riemenscheiben gelenkten Zahnriemens dar, wobei die Riemenscheiben auf Fortsätzen der beiden längsseitigen Antiebswellen angeordnet sind. Eine einfache Entkopplung wird durch ein Abziehen des Zahnriemens erreicht. Eine Entkopplung kann auch mittels einer zwischen dem Fortsatz der Antriebswelle und der Riemenscheibe wirkenden Kupplung übernommen werden.

Von Vorteil ist, wenn die Vorrichtung modulartig aufgebaut ist, bestehend aus einer Halterung zur Aufnahme von handelsüblichen Handbearbeitungsgeräten, aus einem diese Halterung aufnehmenden Gestell und aus an diesem Gestell angebrachten Abstützungen mit weiter oben angeführten Eigenschaften. Die Halterung kann dadurch jederzeit für den Einsatz von verschiedenen Handbearbeitungsgeräten ausgewechselt werden. Die äussere Gestalt und Form der für verschiedene Handbearbeitungsgeräte vorgesehenen Halterungen ist gleich und dem Gestell angepaßt. Die Halterungen unterscheiden sich nur in der inneren Form und Gestalt, die dem jeweiligen Handbearbeitungsgerät, das sie aufnehmen sollen, angepaßt ist. Aus der gleichen Aussengestalt der Halterungen ergibt sich der Vorteil, daß die Vorrichtung für die verschiedensten handelsüblichen Handbearbeitungsgeräte kompatibel ist, also nicht verändert oder umgebaut werden muß. Ebenso ist es nicht nötig, einen Eingriff in die Handbearbeitungsgeräte zum Einbringen spezieller Aufnahmeöffnungen in diese vorzunehmen.

Von Vorteil ist, wenn die Halterung in dem Gestell schwenkbar und bei Bedarf feststellbar gelagert ist. Dafür sind in einer zur Bearbeitungsrichtung parallelen Achse an der Halterung Lagerelemente, wie Zapfen, angebracht, die in entsprechende Lagergegenstücke im Gestell eingebracht werden. Dadurch wird die Halterung und damit das Handbearbeitungsgerät in einer Längsachse schwenkbar angeordnet. Über eine an dem Gestell angebrachte Führung bzw. Abstützung kann die Halterung in verschwenkter als auch in waagerechter Position über eine Klemmeinrichtung festgestellt werden. An einer solchen Führung kann auch ein die Verschwenkung begrenzender Anschlag angebracht werden.

Von besonderm Vorteil ist, wenn das Gestell eine rechteckige Form aufweist und die Abstützungen jeweils an den Ecken des Gestells angebrachten sind. Dadurch kann die Vorrichtung so ausgebildet werden, daß die Abstützungen das Werkstück rahmenartig einschließen bzw. umstehen, wobei auf jeder Seite des Werkstückes zwei Abstützungen angeordnet sind. Durch eine gleichzeitige Verkürzung bzw. Verlängerung der auf einer Seite des Werkstückes liegenden Abstützungen mit gleicher Verstellgeschwindigkeit kann eine Schrägstellung des gesamten Handbearbeitungsgeräts erreicht werden.

Von Vorteil ist, wenn an den verstellbaren Abstützungen Markierungen zur Bestimmung der Hohe der Abstützungen angebracht sind. Ebenso ist es vorteilhaft, wenn die Verschwenkung der Halterung des Handbearbeitungsgeräts in der Einrichtung an einer an dem Gestell angebrachten Winkelmarkierung abzulesen ist.

Für ein gutes Gleiten der gesamten Vorrichtung auf der Auflage des Werkstückes ist es vorteilhaft, wenn an der Unterseite der Abstützungen leicht gleitende Elemente, wie Gleitschuhe, oder Rollelemente angebracht sind.

Um einen breiten Anwendungsbereich abzudecken, ist es von Vorteil, wenn die gesamte Vorrichtung in ihrer Länge als auch in ihrer Breite verstellbar ist. Dies wird erfindungsgemäß durch teleskopartige oder austauschbare Anfertigung der Gestell-Rahmenelemente erreicht.

Von besonderem Vorteil ist, wenn die Halterung mit dem darin angeordnetem Handbearbeitungsgerät aus dem Gestell in seitlicher Querrichtung herausragend anordenbar ist, so daß das Werkzeug in ein seitlich neben der Vorrichtung, z.B. aussen, seitlich an den Abstützungen angelehntes, Werkstück eingreifen kann. Dazu ist die Halterung im Gestell in verschiedenen Positionen anbringbar, zumindest in einer zentralen, innerhalb der zwei durch die jeweils längsseitigen Abstützungen gebildeten Vertikalebenen liegenden Position und in einer seitlich aus einer dieser Vertikalebenen herausragenden Position. Die Halterung ist aber auch über zwischen der Halterung und dem die Halterung aufnehmenden Gestell angeordneten Schienen in dem Gestell verschieblich anbringbar. Diese seitlich herausragende Position der Halterung und des darin angebrachten Handbearbeitungsgeräts und damit des Werkzeugs wirkt sich besonders vorteilhaft bei der Bearbeitung von z. B. bereits an einer Wand montierten Leisten oder von bereits eingepaßten Fensterrahmen aus.

Nachfolgend wird die Erfindung anhand zweier Ausführungsbeispiele unter Bezug auf die Zeichnung näher erläutert.

Es zeigt:
- Fig. 1:: eine perspektivische, teilweise auseinandergezogene Ansicht der modulartig aufgebauten Vorrichtung mit einer Halterung zur Aufnahme einesHandbearbeitungsgerätes und mit einem Handhobelgerät,
- Fig. 2:: eine Ansicht der Vorrichtung gern. Fig. 1, mit in dieser angeordnetem Handhobel in waagerechter Stellung,
- Fig. 3:: eine Rückansicht der Vorrichtung gem. Fig. 2, mit verschwenkter Stellung des Handhobels,
- Fig. 4:: eine Ansicht wie in Fig. 3, mit einseitig verkürzten Abstützungen mit seitlichem Anschlag, d.h. Schrägstellung des Gestells,
- Fig. 5:: eine Ansicht wie in Fig. 4, jedoch ohne seitlichem Anschlag,
- Fig. 6:: eine Schnitt-Ansicht der Höhen-Verstelleinrichtungen einer vorderen Abstützung der Vorrichtung,
- Fig. 7:: eine perspektivische Ansicht der Vorrichtung mit einer seitlich herausgezogenen Längsstrebe, und
- Fig. 8:: eine Rückansicht der Vorrichtung gem. Fig. 7.

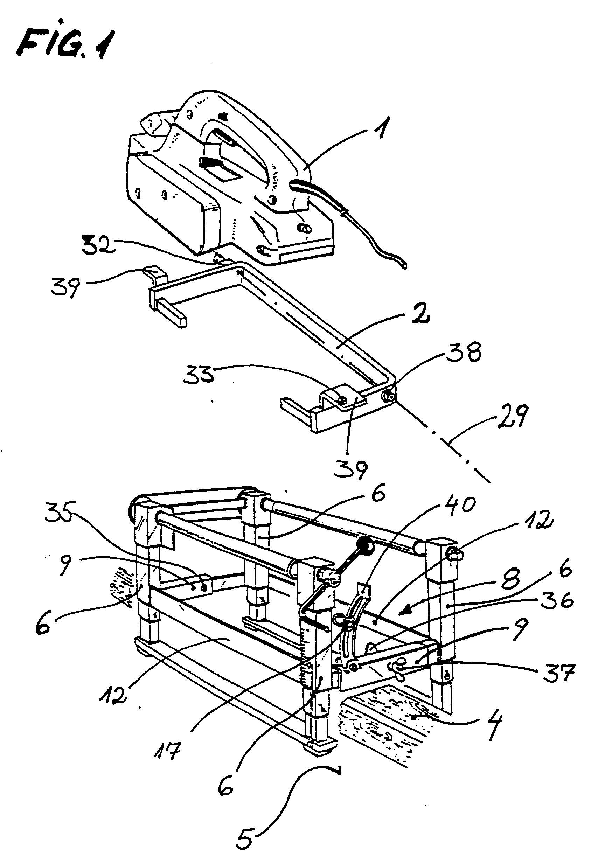

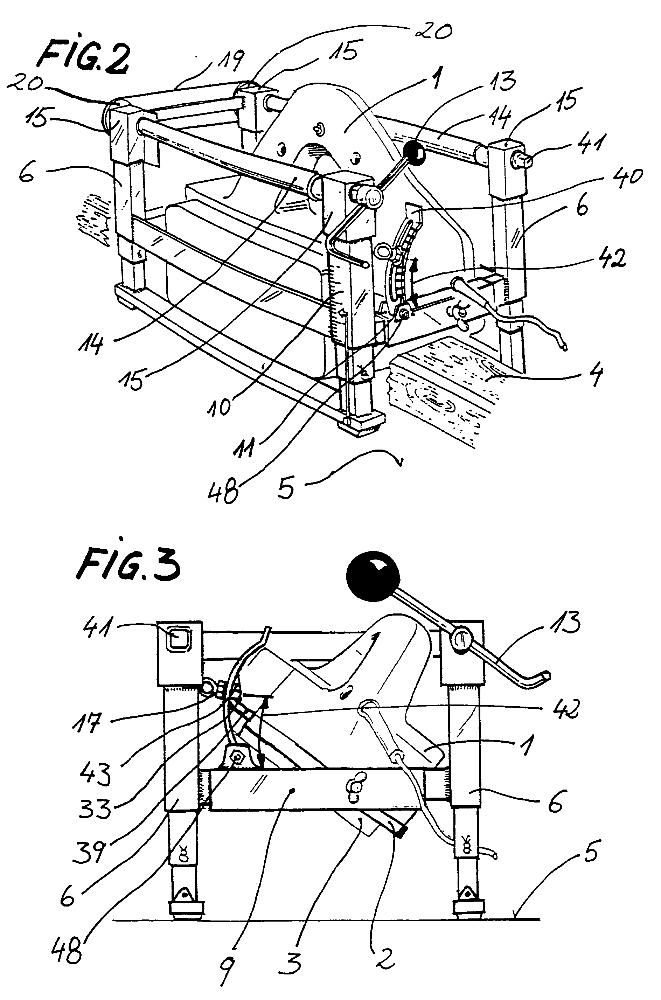

Aus Fig. 1 wird der modulartige Aufbau der Vorrichtung erkennbar. Ein Handbearbeitungsgerät 1, hier ein Handhobel, wird zunächst in einer Halterung 2 formschlüssig aufgenommen und befestigt. Die Halterung 2 wird anschließend in ein Gestell 8 montiert. Für Handbearbeitungsgeräte unterschiedlicher Außengestalt und Außenabmessungen können jeweils unterschiedliche, diesen Abmessungen angepaßten Halterungen 2 vorgesehen werden. Die Aussenabmessungen der verschiedenen Halterungen 2 unterscheiden sich nicht, so daß das Gestell 8 zur Aufnahme der verschiedenen Halterungen 2 nicht verändert werden muß. Dies führt dazu, daß bei einem Gerätewechsel das auszuwechselnde Handbearbeitungsgerät 1 samt der an dieses Gerät angepaßten Halterung 2 aus dem Gestell 8 entnommen wird, dann das Gerät 1 ausgetauscht wird, und das neue Handbearbeitungsgerät 1 mit der Halterung 2 in das Gestell 8 eingesetzt wird. Zur Aufnahme der Halterung 2 im Gestell 8 bilden zwei Längsstreben 12 und zwei Querstreben 9 einen Rahmen, an dessen vier Ecken jeweils Abstützungen 6 befestigt sind. An der Aussenseite der Halterung 2 sind entlang einer Schwenkachse 29 jeweils Drehzapfen 32, 38 angeordnet. Der erste Drehzapfen 32 wird in eine an der Innenseite einer Querstrebe 9 eingearbeiteten Aufnahmebohrung 35 eingebracht. Der zweite Drehzapfen 38 läßt sich in eine radial, d.h. nach oben hin geöffnete Bohrung in der gegenüberliegenden Querstrebe 9 einlegen. Um ein Entweichen bzw. Abheben der Halterung 2 aus dieser Lagerung zu verhindern, kann der in der nach oben geöffneten Bohrung liegende Drehzapfen 38 über einen umlegbaren Riegel 36 eingeschlossen werden. Der Riegel 36 ist mittels einer Flügelschraube 37 verspannbar. Die um die Schwenkachse 29 schwenkbar gelagerte Halterung 2 stützt sich über Auflagewinkel 39 in waagerechter Position auf den Querstreben 9 ab. Eine Fixierung in dieser waagerechten Position oder in einer verschwenkten Position wird über eine in einem an einer Querstrebe 9 über ein Schwenklager 48 verschwenkbar befestigten Bogen 40 verschiebliche Schraube, z.B. Ringschraube 17, hergestellt, die mit einer auf der Gegenseite des Bogens 40 befindlichen Anschlagbegrenzung 43 (s. Fig. 3) verbunden ist. Ist die Ringschraube 17 in unterster Stellung des Bogens 40 verspannt, wird ein Ausschwenken der Halterung 2 durch die Anschlagbegrenzung 43 verhindert, die auf den Auflagewinkel 39 drückt. Über die vier Abstützungen 6 wird der Höhenabstand der Quer- und der Längsstreben 9, 12 und damit der Halterung 2 zur Auflagefläche 5 eines Werkstückes 4 bestimmt.

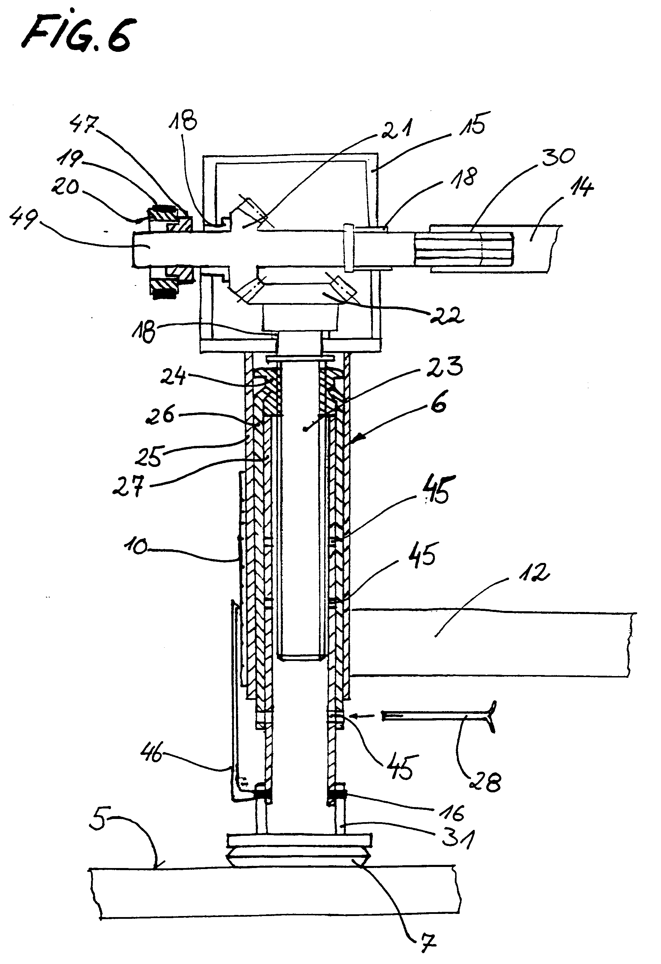

Fig. 2 zeigt die Vorrichtung mit darin angeordnetem Handhobel bzw. Handbearbeitungsgerät 1 in waagerechter Stellung. Die Abstützungen 6 sind jeweils über in diesen angebrachten Gewindespindeln in ihrer höhe verstellbar ausgelegt. Durch die Drehung einer Kurbel 13 wird über in an der Oberseite der Abstützungen 6 angeordneten Getriebegehäuse 15 befindliche Winkeltriebe auf die Gewindespindeln (s. auch Fig. 6) übertragen. Eine gleichmäßige Höhen-Verstellung der Abstützungen 6 wird dadurch erreicht, daß die Drehung der Kurbel 13 über zwischen den Abstützungen angeordneten Antriebswellen 14 und/oder Zahnriemen 19 auf jede der vier Gewindespindeln übertragen wird. Dadurch läßt sich die im Gestell 8 aufgenommene Halterung 2 in der Höhe parallel verschieben. Eine einseitige Verstellung der Abstützungen 6 und damit eine Schrägstellung des in der Halterung 2 aufgenommenen Handbearbeitungsgerätes 1 wird durch eine Entkoppelung der beiden Längsseiten erreicht, indem in einfachster Ausführung der Zahnriemen 19 abgenommen wird. Wie insbesondere aus Fig. 6 erkennbar ist, kann die Entkopplung über eine Schiebemuffe 47 erfolgen oder auch über eine feststehende Muffe und eine axial verschiebliche Riemenscheibe. Dadurch lassen sich die Abstützungen 6 einseitig, d.h. nur jeweils zwei auf einmal, verstellen. Für diese einseitige Verstellung ist jeder Längsseite ein Kurbelzapfen 41 zugeordnet, auf die wahlweise die Kurbel 13 aufgesetzt werden kann. Zudem ist aus Fig. 2 zu erkennen, wie weit die Halterung 2 und damit das Handbearbeitungsgerät 1 über die zwei Verschwenkmöglichkeiten verschwenkbar ist. So legt die Position der Ringschraube 17 auf dem Bogen 40 den möglichen Verschwenkweg 42 der Halterung 2 fest. Hierfür ist am Bogen 40 eine Winkelmarkierung 11 angebracht, um die Verschwenkung der Halterung 2 und damit des Handbearbeitungsgeräts um die Schwenkachse 29 zu bestimmen. An den Abstützungen 6 sind Markierungen 10 zur Bestimmung der Höhenverstellung der Abstützungen 6 angebracht. Die Markierungen 10 befinden sich auf jeder Seite der Vorrichtung, z.B. jeweils an der rückwärtigen, kurbelseitigen Abstützung 6.

Fig. 3 zeigt eine Rückansicht der Vorrichtung mit darin angeordnetem Handhobel in verschwenkter Stellung. Hier ist gut erkennbar, wie der mögliche Verschwenkweg 42 durch die Stellung der Ringschraube 17 festgelegt wird. Die Halterung 2 und das Handbearbeitungsgerät 1 werden bei weggeschwenktem Bogen 40 soweit verschwenkt, bis der Auflagewinkel 39 mit eventuell darin vorgesehener Anschlagschraube 33 über der Anschlagsbegrenzung 43 der Ringschraube 17 zu stehen kommt. Danach wird der Bogen 40 zurückgeschwenkt und die Halterung 2 freigegeben, wonach diese über den Auflagewinkel 39 bzw. die Anschlagschraube 33 auf der Begrenzung von oben her aufsteht. In dieser Stellung ist ein Anfasen des Werkstückes 4 möglich, ohne daß das gesamte Gestell durch einseitige Verkürzung bzw. Verlängerung der Abstützungen 6 in Schrägstellung gebracht werden muß. Dabei kann jedoch nur der unterhalb der Querstrebe 9 liegende Bereich des Werkzeugs 3 in Eingriff mit dem Werkstück 4 gebracht werden, so daß eine flächige, die gesamte Breite des Werkzeugs 3 nutzende Schrägbearbeitung des Werkstückes nicht möglich ist.

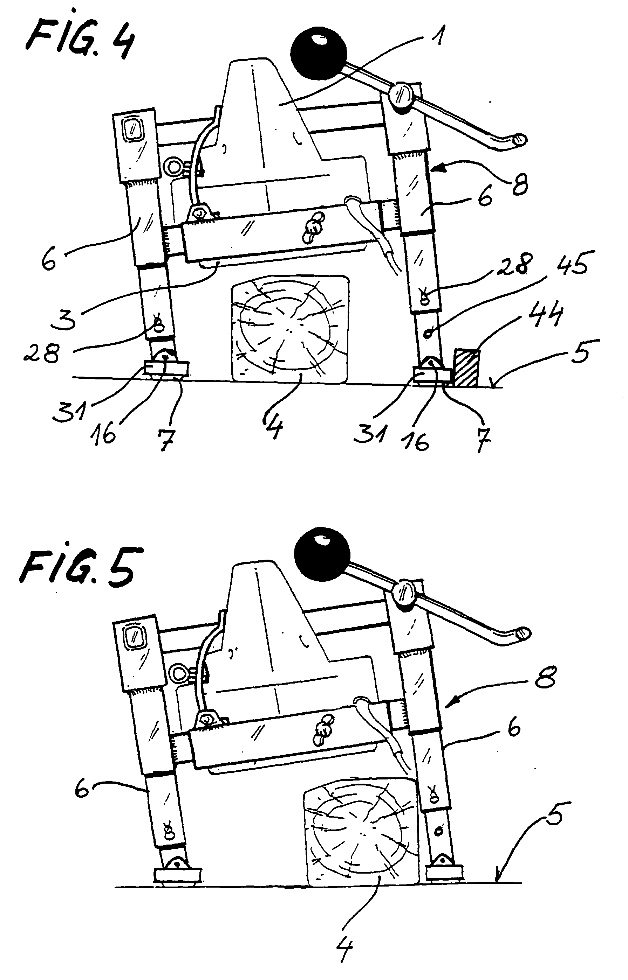

Fig. 4 zeigt ebenfalls eine Rückansicht einer Vorrichtung mit darin angeordnetem Handhobel bzw. Handbearbeitungsgerät 1, jedoch mit einseitig verkürzten Abstützungen 6 und mit einem seitlichen Führungsanschlag 44. Durch die einseitige Verkürzung der Abstützungen 6 ergibt sich eine Schrägstellung des gesamten Gestells 8. Dadurch ist eine großflächige, schräge Bearbeitung des Werkstücks 4 bis zur Breite des Werkzeugs 3 möglich. Wie in Fig. 4 zu erkennen ist, wird die Höheneinstellung der Abstützungen 6 in Stufen mittels Splinten 28 und dafür vorgesehenen Bohrungen 45 realisiert. Auf diese Verstellmöglichkeit wird bei der näheren Beschreibung der Fig. 6 nachfolgend näher eingegangen. An der Abstützungen 6 sind jeweils Füße 31 über ein Gelenk 16 drehbar gelagert, so daß in jeder Position ein flächiges Aufliegen von an der Unterseite der Füße 31 vorgesehenen Gleitschuhen 7 gewährleistet wird.

Aus Fig. 5 wird deutlich, in welcher Weise die Vorrichtung bzw. das Gestell 8 genutzt werden kann, damit ein seitlicher Führungsanschlag wie in Fig. 4 entfällt. Das Werkstück 4 wird dabei zugleich als Führung genutzt. Dabei ist das Werkstück 4 auf der Auflagefläche 5 verspannt.

Fig. 6 verdeutlicht den Aufbau und die Funktion der Höhenverstelleinrichtungung einer Abstützung 6. Die hier dargestellten Einrichtungen ermöglichen sowohl eine stufige als auch eine stufenlose Höhenverstellung. Mit einem auf der Antriebswelle 14 angeordneten ersten Kegelrad 21 steht ein zweites Kegelrad 22 im Eingriff, einen Winkeltrieb bildend. Damit wird die Drehung der Antriebswelle 14 über die beiden Kegelräder 21, 22 auf die mit dem zweiten Kegelrad 22 fest verbundene Gewindespindel 23 übertragen. Auf der Gewindespindel 23 ist eine Gewindehülse 24, die im Verhältnis zum Getriebegehäuse 15 verdrehsicher angeordnet ist, aufgezogen. Ein mit der Gewindehülse 24 fest verbundene Gleitrohr 26 ist zwischen einem am Getriebegehäuse 15 verbundenem Stützrohr 25 und einem Fallrohr 27 angeordnet. Die Verdrehsicherheit aller Rohre 25, 26, 27 und der Gewindehülse 24 wird dadurch erreicht, daß diese z.B. in aufeinander abgestimmten Abmessungen vierkantig ausgeführt sind. Die Drehung der Gewindespindel 23 bewirkt zunächst eine axiale Bewegung der Gewindehülse 24 auf der Gewindespindel 23 und damit ein Heraus- bzw. Hineinfahren des Gleitrohrs 26 aus dem bzw. in das Stützrohr 25. Das mit dem Gleitrohr 26 über einen Splint 28 verbindbare Fallrohr 27 bewegt sich in gleicher Weise. Dadurch erfolgt eine stufenlose Längen- bzw. Höhenverstellung der Abstützung 6. Um eine Verstellung der Abstützung 6 stufenweise zu realisieren, ist das Fallrohr 27 in dem Gleitrohr 26 über mehrere horizontale Bohrungen 45 verstellbar und mittels Splint 28 in den jeweiligen, durch den Abstand der Bohrungen 45 bestimmten Stufen feststellbar. Wie bereits erwähnt, ist am Fallrohr 26 über das Gelenk 16 der Fuß 31 der Abstützung 6 abgebracht. An dem Fuß 31 ist zum besseren Gleiten der Vorrichtung auf der Auflagefläche 5 des Werkstücks 4 der Gleitschuh 7, der z.B. aus Kunststoff besteht, angeordnet. Die drehbaren Teile, wie Antriebswelle 14 und Gewindespindel 23 sind mittels Radial- und Axiallager 18 im Getriebegehäuse 15 geführt. An je einem axialem Fortsatz 49 der Antriebswelle 14 sind entweder rückseitig die Kurbelzapfen 41 oder vorderseitig die Riemenscheibe 20 des Zahnriemens 19 angebracht. Die Antriebswelle 14 ist mit einem Schiebesitz 30 versehen, so daß zum einen Verspannungen im Getriebe vermieden und zum anderen Längenänderungen der Vorrichtung ausgeglichen werden. Die Markierung 10 der Abstützungen 6 sind jeweils an dem Stützrohr 25 angebracht und der Markierungszeiger 46 am Fuß 31 bzw. dem Fallrohr 27 befestigt, so daß immer die Gesamthöhe der Abstützung 6 angezeigt wird und somit sowohl nach eine stufenlosen als auch nach einer stufigen Verstellung der Abstützung 6 festgestellt werden kann.

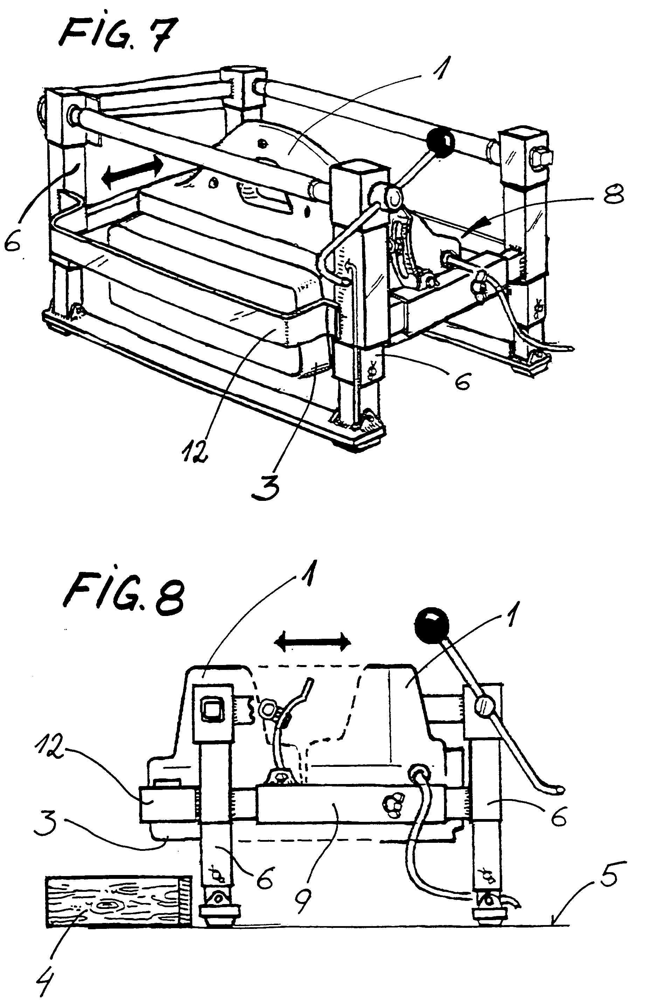

Fig. 7 zeigt eine Vorrichtung in der das Handbearbeitungsgerät 1 in zwei Positionen in das Gestell 8 einbringbar ist. Eine nach aussen hin aufgebogene Längsstrebe 12 ermöglicht eine Positionierung des Handbearbeitungsgeräts 1 auch in der Weise, daß das Werkzeug 3 aus der von den zwei längsseitigen Abstützungen 6 gebildeten Vertikalebene herausragt. Dazu wird die Halterung 2 mit dem darin befestigtem Handbearbeitungsgerät 1 in dem von den beiden Längsstreben 12 und den beiden Querstreben 9 gebildetem Rahmen aus der zentralen Position in diese zweite herausragende Position versetzt. Dazu sind in den Querstreben 9 dieser zweiten Position entsprechende Aufnahmebohrungen 35, hier nicht sichtbar, eingearbeitet. Selbstverständlich kann das in der Halterung 2 aufgenommene Handbearbeitungsgerät 1 in dem von den Quer- und Längsstreben 9, 12 gebildetem Rahmen seitlich, längs der Querstreben 9 verschieblich angeordenet sein. Dazu müßte z.B. die Halterung 2 entweder direkt auf bzw. in den Querstreben 9 verschieblich angeordnet sein oder über zwischen der Halterung 2 und den Querstreben 9 angebrachte Schienen in der von den Längsstreben 12 begrenzten Querrichtung verschoben werden.

Fig. 8 verdeutlicht die oben beschrieben seitlich herausragende Position des Werkzeugs 3. Es ist zu erkennen, daß in dieser Position ein Werkstück 4 bearbeitet werden kann, das von den Abstützungen 6 nicht umschlossen wird (vgl. Fig. 4). Es sind die beiden Extrempositionen ersichtlich, zwischen denen das Handbearbeitungsgerät 1 bei verschieblicher Anordnung positioniert werden kann.

### BEZUGSZEICHENLISTE

- 1.: (Handbearbeitungs-)Gerät
- 2.: Halterung
- 3.: Werkzeug
- 4.: Werkstück
- 5.: Auflage(-fläche)
- 6.: Abstützung
- 7.: Gleitschuh
- 8.: Gestell
- 9.: Querstreben
- 10.: Markierung
- 11.: Winkelmarkierung
- 12.: Längsstreben
- 13.: Kurbel
- 14.: Welle
- 15.: Gertriebegehäuse
- 16.: Gelenk
- 17.: Ringschraube
- 18.: Gleitlager
- 19.: Zahnriemen
- 20.: Riemenscheibe
- 21.: 1. Kegelrad
- 22.: 2. Kegelrad
- 23.: Gewindespindel
- 24.: Gewindehülse
- 25.: Stützrohr
- 26.: Gleitrohr
- 27.: Fallrohr
- 28.: Splint
- 29.: Schwenkachse
- 30.: Schiebesitz
- 31.: Fuß
- 32.: 1. Drehzapfen
- 33.: Anschlagschraube
- 34.: Längsversteifung
- 35.: Aufnahmebohrung
- 36.: Riegel
- 37.: Flügelschraube
- 38.: 2. Drehzapfen
- 39.: Auflagewinkel
- 40.: Bogen
- 41.: Kurbelzapfen
- 42.: Verschwenkweg
- 43.: Begrenzung
- 44.: Führungsanschlag
- 45.: Bohrung
- 46.: Markierungtszeiger
- 47.: Schiebemuffe
- 48.: Schwenklager
- 49.: Fortsatz

## Patentansprüche

1. Vorrichtung zum Führen von Handbearbeitungsgeräten, wie Handhobel, Handfräsen oder Handsägen, mit motorgetriebenen Werkzeugen, zur Bearbeitung von auf einer Auflagefläche befindlichen, längeren Werkstücken, wie Balken, Bretter oder Leisten, wobei die gesamte Vorrichtung mit dem darin angebrachten Handbearbeitungsgerät über das Werkstück geführt wird, und sich die Vorrichtung während der Bearbeitungsphase auf der von der Vorrichtung unabhängigen, mit der Vorrichtung nicht verbundenen Auflagefläche des Werkstückes über in ihrer Höhe einstellbare Abstützungen abstützt,
**dadurch gekennzeichnet,**
- daß der Abstand sowie die Neigung zwischen Auflagefläche (5) und Werkzeug (3) bzw. Handbearbeitungsgerät (1) durch die in ihrer Höhe variablen Abstützungen (6) veränderbar ist,
- und daß die Höhe mehrerer oder aller Abstützungen (6) zugleich verstellbar ist, wobei die Verstellung der Höhe mehrerer oder aller Abstützungen (6) mit gleicher Verstellgeschwindigkeit (Gleichlauf) vornehmbar ist.

2. Vorrichtung nach Anspruch 1, dadurch gekennzeichnet,
daß die Höhe der Abstützungen (6) in Stufen oder stufenlos verstellbar ist.

3. Vorrichtung nach Anspruch 1, dadurch gekennzeichnet,
daß die Verstellung der Höhe der Abstützungen (6) mittels Feststellvorrichtungen oder aufgrund von Selbsthemmung fixiert wird.

4. Vorrichtung nach den Ansprüchen 1 bis 3, dadurch gekennzeichnet,
daß zur stufenlosen Verstellung der Abstützungen (6) Gewindespindeln (23) in den Abstützungen (6) vorgesehen sind, wobei bei gleichzeitiger Verstellung mehrerer oder aller Abstützungen (6) die Gewindespindeln (23) der gleichzeitig zu verstellenden Abstützungen (6) zentral angetrieben werden und über Übertragungselemente trieblich miteinander verbunden sind.

5. Vorrichtung nach Anspruch 1, dadurch gekennzeichnet,
daß eine für die Aufnahme von unterschiedlichen, handelsüblichen Handbearbeitungsgeräten (1) ausgelegte, austauschbare Halterung (2) vorgesehen ist, die in einem rahmenartigem Gestell (8) aufnehmbar ist, an dem die Abstützungen (6) angeordnet sind.

6. Vorrichtung nach Anspruch 5, dadurch gekennzeichnet,
daß die Halterung (2) im Gestell (8) um eine Gerätelängsachse verschwenkbar und sowohl in verschwenkter als auch in waagerechter Stellung feststellbar ist.

7. Vorrichtung nach Anspruch 5, dadurch gekennzeichnet,
daß das Gestell (8) eine im wesentlichen rechteckige Form aufweist und daß die Abstützungen (6) in den jeweiligen Ecken des Gestells (8) angebracht sind.

8. Vorrichtung nach Anspruch 6, dadurch gekennzeichnet, daß die Halterung (2) zwei koaxiale in Längsrichtung weisende Drehzapfen (32, 38) aufweist, die in Aufnahmebohrungen (35) eines im wesentlichen horizontalen Rahmens (9, 12) des Gestells (8) schwenkbar einrasten und daß an der Halterung (2) mindestens ein Auflagewinkel (39) angebracht ist, zur vertikalen Abstützung am Rahmen (9, 12).

9. Vorrichtung nach Anspruch 8, dadurch gekennzeichnet,
daß an einer Querstrebe (9) des Gestellrahmens (9, 12) ein in Querrichtung verschwenkbarer Bogen (40) angebracht ist, der eine in Längserstreckung des Bogens (40) verschiebbare Ringschraube (17) mit Anschlagsbegrenzung (43) aufweist, die wiederum mit dem Auflagewinkel (39) der Halterung (2) zusammenwirkt.

10. Vorrichtung nach Anspruch 5, dadurch gekennzeichnet,
daß die Höhe der Abstützungen (6) an daran angebrachten Markierungen (10) bzw. die Verschwenkung der Halterung (2) an einer Winkelmarkierung (11) am Bogen (40) ablesbar bzw. bestimmbar ist.

11. Vorrichtung nach Anspruch 1, dadurch gekennzeichnet,
daß an den Abstützungen (6) jeweils Füße (31) über ein Gelenk (16) schwenkbar gelagert sind.

12. Vorrichtung nach Anspruch 1, dadurch gekennzeichnet,
daß an den Abstützungen (6) an den der Auflage (5) zugewandten Flächen gleitende Elemente, wie Gleitschuhe (7) aus Kunststoff , z.B. Teflon, oder Rollelemente angebracht sind.

13. Vorrichtung nach Anspruch 1, dadurch gekennzeichnet,
daß die Vorrichtung in ihrer Breite und Länge verstellbar ist, wobei die die Länge oder die Breite der Vorrichtung festlegenden Bauteile teleskopartig in ihrer Länge veränderbar oder austauschbar ausgebildet sind.

14. Vorrichtung nach Anspruch 4, dadurch gekennzeichnet,
daß an den oberen Enden der Abstützungen (6) Getriebegehäuse (15) vorgesehen sind, in denen Winkelgetriebe, wie Kegelräder (21, 22) angeordnet sind, die einerseits mit der jeweiligen Gewindespindel (23) und andererseits mit einer längsseitigen Antriebswelle (14) des Gestells (8) bzw. mit einem schmalseitigen, vorderen Zahnriemen (19), der mit der Antriebswelle (14) über die Riemenscheiben (20) in trieblicher Verbindung steht, verbunden sind.

15. Vorrichtung nach Anspruch 5, dadurch gekennzeichnet,
daß die Halterung (2) mit dem darin angeordneten Handbearbeitungsgerät (1) in horizontaler Querrichtung so verschiebbar oder versetzbar im Gestell (8) anordenbar ist, daß das Werkzeug (3) außerhalb der durch die längsseitigen Abstützungen (6) verlaufenden Vertikalebenen in Eingriff mit dem Werkstück (4) bringbar ist.
